# DEMANDE DE BREVET EUROPEEN

(11) **EP 4 378 654 A1**
(43) Date de publication de la demande: **05.06.2024**
(21) Numéro de dépôt: 23212128.5
(22) Date de dépôt: 24.11.2023
(51) Int. Cl.: B29B 17/02, B29B 17/04, B29K 23/00, B29L 31/34

(54) **PROCÉDÉ DE TRAITEMENT POUR RECYCLAGE D'UN MODULE PHOTOVOLTAÏQUE**

(30) Priorité: 29.11.2022 FR 2212498
(71) Demandeur: Commissariat à l'énergie atomique et aux énergies alternatives, 75015 Paris (FR)
(72) Inventeur: COUSTIER, Fabrice, 38054 Grenoble CEDEX 09 (FR); CORTELLA, Laurent, 38054 Grenoble CEDEX 09 (FR); MESSAOUDI, Paul, 38054 Grenoble CEDEX 09 (FR); RIVA, Roland, 38054 Grenoble CEDEX 09 (FR)
(74) Mandataire: Cabinet Nony

(57) **Abrégé**

Procédé de traitement pour recyclage d'un dispositif fonctionnel, notamment d'un module photovoltaïque (M), le dispositif fonctionnel comportant au moins l'un d'une cellule photovoltaïque (20) ou d'une diode électroluminescente (DEL) noyée dans un encapsulant (21) comportant un matériau polymère, le procédé comportant les étapes suivantes :
(a) irradiation du dispositif fonctionnel par un traitement ionisant modifiant les propriétés mécaniques de l'encapsulant, et
(b) usinage de l'encapsulant (21), afin de réduire celui-ci en copeaux.

## Description

### Domaine technique

La présente invention concerne un procédé de traitement pour recyclage d'un dispositif fonctionnel, notamment d'un module photovoltaïque. Le dispositif fonctionnel comporte au moins l'un d'une cellule photovoltaïque ou d'une diode électroluminescente (DEL) noyée dans un encapsulant comportant un matériau polymère.

### Technique antérieure

Un dispositif fonctionnel, tel qu'un module photovoltaïque, comporte des cellules photovoltaïques destinées à convertir une énergie solaire en énergie électrique, ou des diodes électroluminescentes destinées à convertir une énergie électrique en énergie lumineuse.

Un tel dispositif fonctionnel comporte de nombreux matériaux intéressants à récupérer et à valoriser, lorsque le dispositif fonctionnel est en fin de vie ou défaillant.

En vue de son recyclage, on connait différentes solutions pour séparer les différents matériaux qui le composent, mais qui peuvent être coûteuses en énergie et peu respectueuses de l'environnement.

On connait notamment par la demande internationale WO 2019/043329 un procédé de désassemblage d'un module photovoltaïque, qui consiste à retirer chaque couche du module pour la séparer, en la découpant avec un fil abrasif. Chaque couche retirée peut ensuite être traitée de manière séparée en vue de récupérer les matériaux d'intérêt. Cependant, ce procédé peut être assez lent compte tenu de la ductilité du matériau polymère encapsulant utilisé, à savoir de l'éthylène-acétate de vinyle (EVA).

Il existe un besoin pour améliorer encore et faciliter le recyclage d'un dispositif fonctionnel, notamment d'un module photovoltaïque.

### Résumé de l'invention

L'invention a ainsi pour objet, selon l'un de ses aspects, un procédé de traitement pour recyclage d'un dispositif fonctionnel, notamment d'un module photovoltaïque, le dispositif fonctionnel comportant au moins l'un d'une cellule photovoltaïque ou d'une diode électroluminescente (DEL) noyée dans un encapsulant comportant un matériau polymère, le procédé comportant les étapes suivantes :
(a) irradiation du dispositif fonctionnel par un traitement ionisant modifiant les propriétés mécaniques de l'encapsulant, et
(b) usinage de l'encapsulant, afin de réduire celui-ci en copeaux.

### Dispositif fonctionnel

On entend par « dispositif fonctionnel » un dispositif comprenant un empilement multicouche comprenant au moins :
- une couche de protection transparente disposée en face avant, par exemple en verre,
- un encapsulant en matériau polymère, par exemple de type élastomère transparent, dans lequel est encapsulé ou enrobé au moins un élément électriquement ou optiquement actif, tels que des cellules photovoltaïques ou des diodes électroluminescentes (DEL), et
- une couche de protection disposée en face arrière du dispositif, par exemple en verre également, ou encore par exemple à base de polymères multi-couches définissant une face arrière non transparente, dite « *backsheet* ».

Le dispositif fonctionnel peut comporter au moins une cellule photovoltaïque ou une diode électroluminescente.

Il peut s'agir d'un module photovoltaïque. Le module photovoltaïque en tant que tel comporte des cellules photovoltaïques disposées entre une face avant et une face arrière, et qui sont reliées électriquement entre elles par des conducteurs de liaison et immergées entre deux couches avant et arrière de matériau d'encapsulation formant toutes les deux l'encapsulant.

Le matériau polymère de l'encapsulant peut avoir en l'absence d'irradiation un comportement mécanique de type caoutchoutique, ce qui est notamment le cas de l'EVA. Un tel comportement peut rendre plus difficile l'usinage, l'arrachement ductile étant plus lent qu'un arrachement fragile. L'irradiation permet d'obtenir un comportement du matériau polymère plus fragile, permettant de faciliter son usinage et sa réduction en copeaux. L'usinage peut être plus rapide et plus aisé. En effet, l'irradiation du matériau polymère permet de modifier ses propriétés physiques, notamment mécaniques. Le matériau polymère devient plus cassant, plus rigide, moins élastique.

Le traitement pour recyclage du dispositif fonctionnel en est plus aisé à mettre en oeuvre et moins coûteux. Il permet d'éviter d'utiliser trop d'énergie ou de produire des effluents.

### Encapsulant

L'ensemble encapsulant peut être formé à partir d'au moins un film avant et un film arrière comportant au moins un matériau d'encapsulation de type polymère choisi parmi : les copolymères d'acides, les ionomères, le poly(éthylène-acétate de vinyle) (EVA), les acétals de vinyle, tels que les polyvinylbutyrals (PVB), les polyuréthanes, les polyéthylènes, tels que les polyéthylènes linéaires basse densité, les polyoléfines élastomères de copolymères, les copolymères d'α-oléfines et des α-, β- esters d'acide carboxylique à éthylénique, tels que les copolymères éthylène-acrylate de méthyle et les copolymères éthylène-acrylate de butyle, les élastomères de silicone et/ou les élastomères à base de polyoléfine thermoplastique réticulée.

Par le terme « encapsulant » ou « encapsulé », il faut comprendre que la pluralité de cellules photovoltaïques ou DEL est disposée dans un volume, par exemple hermétiquement clos vis-à-vis des liquides et des gaz, au moins en partie formé par au moins deux films de matériau(x) d'encapsulation, réunies entre eux après lamination pour former l'ensemble encapsulant.

En effet, initialement, c'est-à-dire avant toute opération de lamination, l'ensemble encapsulant est constitué par au moins deux films de matériau(x) d'encapsulation, entre lesquels la pluralité de cellules photovoltaïques ou DEL est encapsulée.

Toutefois, pendant l'opération de lamination des films, les films de matériau d'encapsulation fondent pour ne former, après l'opération de lamination, qu'un seul ensemble solidifié dans lequel sont noyées les cellules photovoltaïques ou DEL.

Un module photovoltaïque peut comporter deux couches de protection, une première couche de protection formant par exemple la face avant et réalisée dans un ou des matériaux transparents choisi dans la liste suivante, qui n'est pas limitative : verre, matériau composite, matière plastique, polymère. Un module photovoltaïque peut comporter une deuxième couche de protection formant la face arrière et réalisée dans un ou des matériaux choisis dans la liste suivante, qui n'est pas limitative : verre, matériau composite, matière plastique, polymère, métaux. Dans le cas où les première et deuxième couches de protection sont réalisées en verre, on parle de module biverre.

### Exposé de l'invention

### Usinage

L'étape (b) d'usinage a lieu après l'étape (a) d'irradiation. L'irradiation du dispositif par le traitement ionisant va permettre de faciliter son usinage ultérieur. L'invention permet par exemple de faciliter le démantèlement du dispositif fonctionnel tel qu'un module photovoltaïque, et ainsi de faciliter son recyclage. On peut ainsi plus aisément récupérer pour les recycler les matériaux d'intérêt du dispositif fonctionnel.

L'étape (b) d'usinage est mécanique. L'étape (b) d'usinage peut comprendre au moins l'un de : découpage, notamment par un fil abrasif, fraisage, ponçage, notamment au moyen d'une bande abrasive ou d'une meule. Le fil abrasif peut être diamanté.

L'étape (b) d'usinage peut par exemple être mise en oeuvre au moyen du procédé décrit dans la demande de brevet WO 2019/043329, dont le contenu est incorporé par référence. L'irradiation permet de faciliter le mouvement du fil abrasif ou de la bande abrasive, ou tout autre mode de découpage ou d'usinage mécanique.

Le fraisage peut permettre d'enlever l'encapsulant et le séparer des cellules photovoltaïques.

Le procédé peut comporter une étape supplémentaire (c) de collecte des copeaux obtenus à l'étape (b) d'usinage.

Les copeaux obtenus peuvent avoir une taille deux fois inférieure, voire trois fois inférieure, à la taille des copeaux obtenus sans irradiation, à conditions d'usinage constantes.

En utilisant des diamants de taille moyenne 100 µm, les copeaux obtenus peuvent avoir une taille inférieure à 60 µm, mieux inférieure à 50 µm, voire inférieure à 40 µm, étant par exemple de l'ordre de 30 µm, avec une taille de référence de 70 µm sans irradiation.

La faible taille des copeaux obtenus montre que grâce à l'irradiation l'usinage est plus fragile que ductile.

Dans l'invention, l'étape d'usinage n'est pas mise en oeuvre pour mettre un objet aux cotes désirées, ni pour lui donner une forme particulière, mais pour former des copeaux du matériau polymère de l'encapsulant, afin de récolter des matériaux d'intérêt avec un bon rendement et les valoriser.

Les copeaux obtenus, habituellement traités comme des déchets ou rebus, peuvent grâce à l'invention être source de matériaux d'intérêt. L'invention permet leur recyclage, et d'offrir une nouvelle vie aux matériaux qui constituent le dispositif fonctionnel. Les matériaux peuvent être traités séparément et revalorisés.

Le matériau polymère de l'encapsulant, par exemple de l'EVA, peut être réutilisé dans la fabrication de produits tels que tapis de sol, semelles de chaussures, cette liste n'étant pas limitative.

Le matériau polymère peut comporter un élastomère transparent, notamment comportant un éthylène-acétate de vinyle (EVA) ou une polyoléfine élastomères (POE), notamment polyisobutylène (PIB), éthylène-propylène (EPR ou EPM) ou éthylène-propylène-diène monomère (EPDM).

### Traitement ionisant

L'étape (a) d'irradiation est en particulier suivie par l'étape (b) d'usinage.

L'irradiation par traitement ionisant signifie irradiation par traitement par rayonnement ionisant.

L'irradiation peut être avantageusement réalisée sur plus de 80%, voire sur 100% de la surface du dispositif fonctionnel.

Le traitement ionisant permet de modifier les propriétés mécaniques du matériau polymère, de manière à faciliter leur usinage.

Le traitement ionisant peut permettre de produire d'une part de nouvelles liaison ou pontage dans le matériau polymère, il peut s'agir d'un phénomène de réticulation, ce qui a pour effet de le rigidifier, et d'autre part peut casser des chaines dans le matériau polymère, il peut s'agir d'un phénomène de dépolymérisation, ce qui peut le fragiliser et ainsi faciliter son usinage.

Le traitement ionisant peut comporter l'un au moins d'un rayonnement gamma, de rayons X, d'un rayonnement bêta, d'un faisceau d'électrons, cette liste n'étant pas limitative.

L'utilisation d'un faisceau d'électrons focalisé peut avantageusement permettre de faciliter la focalisation du traitement ionisant, et donc de mieux diriger le traitement, notamment vers l'encapsulant plutôt que vers les couches de protection du dispositif fonctionnel.

Le traitement ionisant peut être configuré pour que la dose absorbée par le dispositif fonctionnel, notamment par l'encapsulant, soit supérieure à 20 kGy (kiloGray), voire supérieure à 30 kGy, mieux supérieure à 40 kGy, notamment supérieure à 50 kGy, étant par exemple de l'ordre de 90 kGy. Une telle irradiation permet de modifier les propriétés mécaniques de l'encapsulant de manière satisfaisante.

Le traitement ionisant peut être configuré pour que la dose absorbée par le dispositif fonctionnel, notamment par l'encapsulant, soit inférieure à 150 kGy (kiloGray), voire inférieure à 130 kGy, mieux inférieure à 120 kGy, notamment inférieure à 100 kGy, étant par exemple de l'ordre de 90 kGy.

Une telle irradiation permet de ne pas affecter les autres couches du dispositif, notamment les couches de protection, en particulier la couche de protection disposée en face arrière du dispositif, par exemple à base de polymères multi-couches définissant une face arrière non transparente, dite « *backsheet* »*.*

Une telle irradiation est ainsi sélective, notamment lorsqu'on choisit une dose comprise dans les gammes mentionnées ci-dessus.

En outre, les polymères utilisés pour cette couche de protection peuvent être plus résistants à l'irradiation, et être moins fragilisés par celle-ci que le matériau polymère de l'encapsulant. Ainsi, la couche de protection pourra être réutilisée le cas échéant dans son état initial.

Le traitement ionisant peut être configuré pour que la dose absorbée par le dispositif fonctionnel, notamment par l'encapsulant, soit comprise entre 20 et 150 kGy, voire entre 30 et 120 kGy, mieux entre 40 et 100 kGy.

En particulier, les propriétés d'adhésion du matériau polymère aux couches de protection peuvent être diminuées, par exemple de 25 à 40 % pour une couche de protection en verre, et de 10 à 22 % pour une couche de protection à base de polymères.

Ces modifications peuvent notamment permettre de faciliter l'usinage, concernant en particulier le couple moteur de l'usinage, la flèche du fil de découpe et en général les paramètres d'usinage, notamment la vitesse.

La vitesse d'usinage peut être au moins deux fois supérieure, voire trois fois supérieure, à la vitesse d'usinage sans irradiation, à conditions d'usinage constantes.

La vitesse d'usinage peut être supérieure à 50 mm/min, voire supérieure à 60 mm/min, mieux supérieure à 70 mm/min, étant par exemple de l'ordre de 80 à 150 mm/min, avec une vitesse de référence sans irradiation de 200 mm/min, à conditions d'usinage constantes.

La vitesse d'usinage peut être supérieure à 400 mm/min, voire supérieure à 500 mm/min, mieux supérieure à 600 mm/min, étant par exemple de l'ordre de 700 mm/min, avec une vitesse de référence sans irradiation de 200 mm/min, à conditions d'usinage constantes.

Dans le procédé, à l'étape (b) d'usinage, on peut collecter plus de copeaux en masse que sans irradiation, à conditions d'usinage constantes, notamment plus de 5%, voire plus de 10%, mieux plus de 15%, voire plus de 20% de copeaux en masse. Dans un mode de réalisation, on peut collecter plus de 30%, voire plus de 35% de copeaux en masse, que sans irradiation, à conditions d'usinage constantes.

Dans le procédé, à l'étape (b) d'usinage, on peut collecter plus de copeaux en volume que sans irradiation, à conditions d'usinage constantes, notamment plus de 20%, voire plus de 30%, mieux plus de 40%, voire plus de 50% de copeaux en volume. Dans un mode de réalisation, on peut collecter plus de 60%, voire plus de 70% de copeaux en volume, que sans irradiation, à conditions d'usinage constantes.

L'invention a encore pour objet, indépendamment ou en combinaison avec ce qui précède, un procédé de recyclage d'un module photovoltaïque, comportant la mise en oeuvre du procédé de traitement tel que décrit ci-dessus pour désassembler le module photovoltaïque.

L'invention a encore pour objet, indépendamment ou en combinaison avec ce qui précède, une installation de traitement pour recyclage d'un dispositif fonctionnel, notamment d'un module photovoltaïque, le dispositif fonctionnel comportant au moins l'un d'une cellule photovoltaïque ou d'une diode électroluminescente (DEL) noyée dans un encapsulant comportant un matériau polymère, notamment pour la mise en oeuvre du procédé tel que décrit ci-dessus, l'installation comportant :
- un dispositif d'irradiation du dispositif fonctionnel par un traitement ionisant, afin de modifier les propriétés mécaniques de l'encapsulant, et
- un dispositif d'usinage de l'encapsulant, afin de réduire celui-ci en copeaux.

Le dispositif d'irradiation peut être configuré pour permettre l'irradiation du dispositif fonctionnel du côté de la couche de protection en verre, ou en variante du côté de la couche de protection à base de polymères multi-couches.

Le dispositif d'irradiation peut être configuré pour permettre l'irradiation du dispositif fonctionnel sensiblement perpendiculairement à celui-ci. Cela permet d'obtenir une irradiation plus homogène.

Le dispositif d'usinage peut comporter l'un au moins de : un fil abrasif, une bande abrasive, une meule, une fraise, cette liste n'étant pas limitative.

L'installation peut comporter des moyens de collecte des copeaux obtenus à l'étape (b) d'usinage.

### Brève description des dessins

L'invention pourra être mieux comprise à la lecture de la description détaillée qui va suivre, d'exemples de réalisation non limitatifs de celle-ci, et à l'examen du dessin annexé, sur lequel :
[Fig 1] La figure 1 est une vue en perspective, schématique et partielle, d'un module photovoltaïque.
[Fig 2] La figure 2 est une vue en coupe, schématique et partielle, du module photovoltaïque de la figure 1.
[Fig 3] La figure 3 est un schéma en blocs illustrant le procédé selon l'invention.
[Fig 4] La figure 4 est une vue analogue à la figure 2 de la mise en oeuvre du procédé selon l'invention.

### Description détaillée

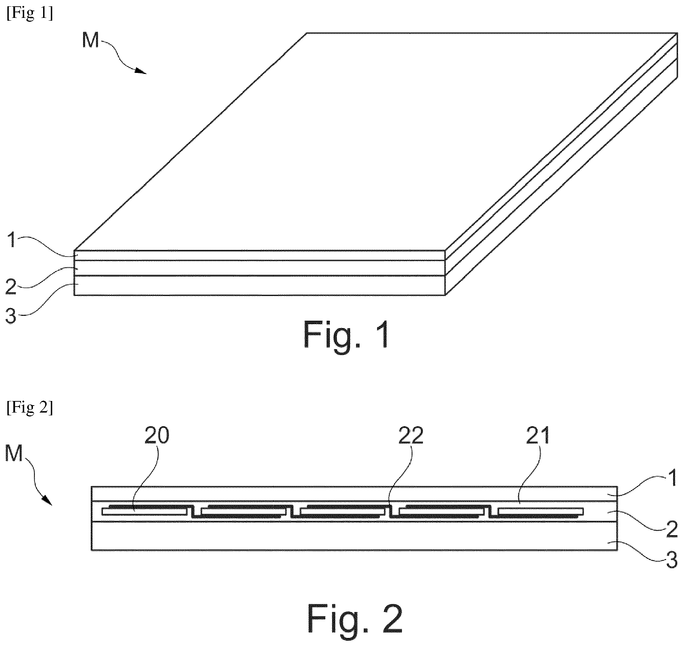

On a illustré aux figures 1 et 2 un module photovoltaïque M comportant plusieurs couches superposées et assemblées entre elles :
- Une première couche de protection 1 (appelée couramment "*backsheet*") en face arrière ; cette première couche de protection 1 est habituellement réalisée à base de polymères multi-couches ; elle peut être opaque ou transparente, monocouche ou multicouche ;
- Une deuxième couche 2, dite couche intermédiaire, intercalée entre la première couche et la troisième couche 3, décrite ci-dessous, permettant l'assemblage d'un côté de la première couche de protection 1 et de l'autre côté de la troisième couche de protection 3 ; cette couche intermédiaire comportant des cellules photovoltaïques 20, la connectique électrique 22 et un encapsulant 21 arrangé autour des cellules photovoltaïques ;
- Une troisième couche de protection 3 en face avant ; cette troisième couche de protection 3 est habituellement en verre, par exemple en verre trempé transparent d'épaisseur d'environ 3 à 4 mm.

Il faut noter que sur les figures annexées, le module photovoltaïque M est représenté retourné, de sorte que sa face arrière est située au-dessus et la face avant est située au-dessous. Pour des soucis de lisibilité sur les figures, les différentes couches du module ne sont pas représentées à l'échelle. A titre d'exemple, la première couche 1 peut présenter une épaisseur de quelques centaines de micromètres, par exemple environ 350 µm, la deuxième couche 2 peut présenter une épaisseur pouvant aller jusqu'à 1 mm et la troisième couche 3 peut présenter une épaisseur d'environ 3 à 4 mm.

Dans la suite de la description, la face avant du module photovoltaïque M correspond à une face du module recevant les rayons lumineux et la face arrière correspond à la face opposée à la face avant. Les deux couches de protection 1 et 3 peuvent présenter une fonction de rigidification et/ou une fonction de protection de surface.

La première couche 1 peut notamment assurer une fonction d'imperméabilité aux gaz et à l'eau, une fonction de protection/isolation électrique et une fonction de protection mécanique. Cette première couche 1 peut être réalisée à base d'un polymère fluoré. Il peut s'agir du polyfluorure de vinyle (PVF), par exemple commercialisé sous le nom TEDLAR (marque déposée) par la société DuPont (marque déposée). De manière non limitative, la première couche 1 peut elle-même être composée d'un empilement de plusieurs strates : une strate de PVF, une strate en PET (poly(téréphtalate) d'éthylène), une strate de PVF.

Dans la couche intermédiaire 2, l'encapsulant 21 est classiquement réalisé dans un polymère tel que de l'EVA (Ethylène-Acétate de Vinyl) formant un matériau sur lequel peuvent adhérer la première couche 1 d'un côté et la troisième couche 3 de l'autre côté et permettre l'assemblage des trois couches entre elles. Les trois couches peuvent être assemblées entre elles par laminage à chaud, de sorte que la première couche et la troisième couche viennent adhérer au matériau de l'encapsulant 21, formant ainsi un empilement monobloc.

Dans la couche intermédiaire 2, les cellules photovoltaïques 20 sont connectées entre elles, en série/parallèle, formant plusieurs chaînes ("*string*" en anglais) de cellules. Des éléments de connexion électrique 22, par exemple en cuivre, permettent d'assurer les liaisons électriques entre les cellules 20 dans chaque chaîne.

Le module photovoltaïque M peut comporter un cadre (non représenté), par exemple en aluminium, agencé en périphérie de l'empilement pour rigidifier le module M. Pour la mise en oeuvre de l'invention, ce cadre, ainsi que la boîte de jonction électrique (non représentée) généralement fixée sur la face arrière du module M, peuvent être préalablement retirés.

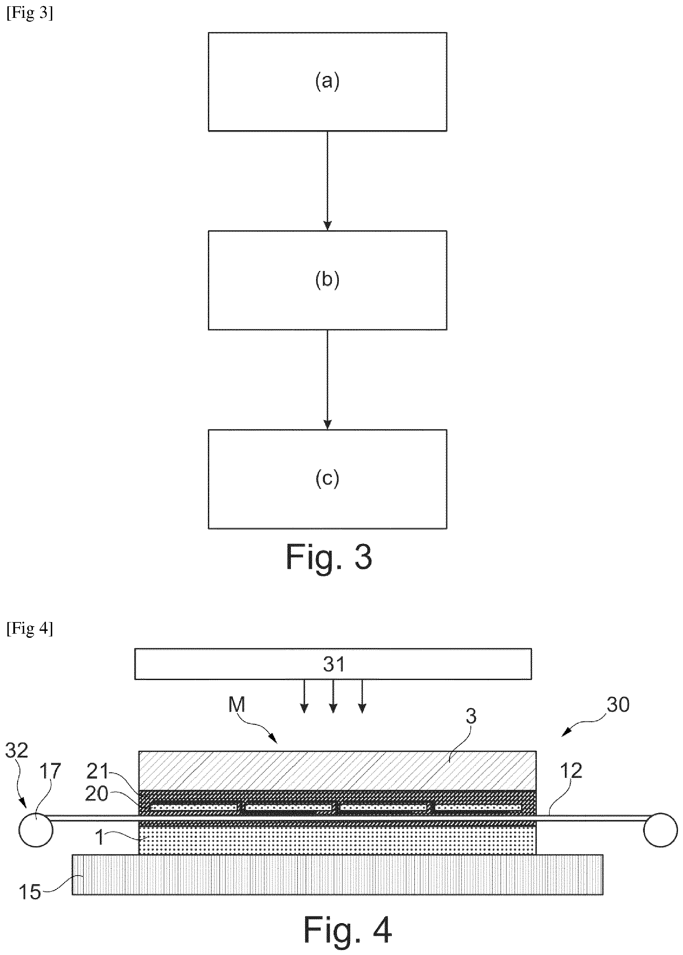

L'invention concerne le recyclage du module photovoltaïque M, comportant la mise en oeuvre d'un procédé de traitement qui va maintenant être décrit plus en détails, en référence à la figure 3. Le procédé de traitement pour recyclage du module photovoltaïque M comporte les étapes suivantes :
(a) irradiation du module photovoltaïque M par un traitement ionisant modifiant les propriétés mécaniques de l'encapsulant 21, et
(b) usinage de l'encapsulant 21, afin de réduire celui-ci en copeaux.

Le traitement ionisant de l'étape (a) permet de modifier les propriétés mécaniques du matériau polymère de l'encapsulant 21, de manière à faciliter son usinage. Le traitement ionisant comporte l'un au moins d'un rayonnement gamma, de rayons X, d'un rayonnement bêta, d'un faisceau d'électrons, cette liste n'étant pas limitative. Le traitement ionisant peut être configuré pour que la dose absorbée par le module photovoltaïque M, notamment par l'encapsulant 21, soit comprise entre 20 et 150 kGy, voire entre 30 et 120 kGy, mieux entre 40 et 100 kGy. Une telle irradiation permet de modifier les propriétés mécaniques de l'encapsulant 21 de manière satisfaisante.

Le matériau polymère de l'encapsulant 21 peut avoir en l'absence d'irradiation un comportement mécanique de type caoutchoutique, ce qui est notamment le cas de l'EVA. Un tel comportement peut rendre plus difficile l'usinage, l'arrachement ductile étant plus lent qu'un arrachement fragile. L'irradiation permet d'obtenir un comportement du matériau polymère plus fragile, permettant de faciliter son usinage et sa réduction en copeaux. L'usinage peut être plus rapide et plus aisé. En effet, l'irradiation du matériau polymère permet de modifier ses propriétés physiques, notamment mécaniques. Le matériau polymère devient plus cassant, moins élastique.

Une telle irradiation permet de ne pas affecter les autres couches, notamment les couches de protection, en particulier la couche de protection 1 disposée en face arrière. En outre, les polymères utilisés pour cette couche de protection peuvent être plus résistants à l'irradiation, et être moins fragilisés par celle-ci que le matériau polymère de l'encapsulant 21. Ainsi, la couche de protection 1 pourra être réutilisée le cas échéant dans son état initial.

L'étape (b) d'usinage est mécanique. L'étape (b) d'usinage comprend dans l'exemple décrit le découpage par un fil abrasif 12. Le fil abrasif 12 peut être diamanté. L'étape (b) d'usinage peut par exemple être mise en oeuvre au moyen du procédé décrit dans la demande de brevet WO 2019/043329.

Par ailleurs, le procédé comporte une étape supplémentaire (c) de collecte des copeaux obtenus à l'étape (b) d'usinage. Les copeaux obtenus ont une taille deux fois inférieure, voire trois fois inférieure, à la taille des copeaux obtenus sans irradiation, à conditions d'usinage constantes. En utilisant des diamants de taille moyenne 100 µm, les copeaux obtenus peuvent avoir une taille de l'ordre de 30 µm, avec une taille de référence de 70 µm sans irradiation. La faible taille des copeaux obtenus montre que grâce à l'irradiation l'usinage est plus fragile que ductile.

A l'étape (b) d'usinage, on collecte plus de copeaux en masse que sans irradiation, à conditions d'usinage constantes, notamment plus de 5%, voire plus de 10%, mieux plus de 15%, voire plus de 20% de copeaux en masse. Dans un mode de réalisation, on peut collecter plus de 30%, voire plus de 35% de copeaux en masse, que sans irradiation, à conditions d'usinage constantes.

A l'étape (b) d'usinage, on collecte plus de copeaux en volume que sans irradiation, à conditions d'usinage constantes, notamment plus de 20%, voire plus de 30%, mieux plus de 40%, voire plus de 50% de copeaux en volume. Dans un mode de réalisation, on peut collecter plus de 60%, voire plus de 70% de copeaux en volume, que sans irradiation, à conditions d'usinage constantes.

Le procédé de traitement de l'invention est mis en oeuvre à l'aide d'une installation de traitement 30 adaptée, comme illustré à la figure 4. L'installation de traitement pour recyclage d'un module photovoltaïque M comporte :
- un dispositif d'irradiation 31 du module photovoltaïque M par un traitement ionisant, afin de modifier les propriétés mécaniques de l'encapsulant 21, et
- un dispositif d'usinage 32 de l'encapsulant 21, afin de réduire celui-ci en copeaux.

Le dispositif d'irradiation 31 est configuré pour permettre l'irradiation du module photovoltaïque M du côté de la couche de protection 3 en verre. A cet effet, l'installation 30 comporte un support 15 sur lequel est positionné le module photovoltaïque M. Le dispositif d'irradiation 31 est configuré pour permettre l'irradiation du dispositif fonctionnel sensiblement perpendiculairement à celui-ci, comme illustré par les flèches. Cela permet d'obtenir une irradiation plus homogène.

Le dispositif d'usinage 32 comporte un outil de découpe 17 ayant par exemple un fil abrasif 12, agencé pour permettre la découpe, notamment à sec, de l'encapsulant 21 en vue de séparer les cellules photovoltaïques 20 de celui-ci.

La hauteur du fil abrasif 12 par rapport au support 15 est calculée de façon à permettre la découpe souhaitée de de l'encapsulant 21 lorsque la première couche de protection 1 repose sur le support 15. Le support 15 peut se déplacer alors que l'outil de découpe 17 reste fixe, nonobstant le défilement du fil abrasif 12 pour permettre la découpe. Alternativement, c'est l'outil de découpe 17 qui se déplace alors que le module photovoltaïque M reste fixe. Ainsi, l'installation peut être configurée pour mettre en oeuvre un mouvement relatif entre le support 15 et l'outil de découpe 17 lors de la découpe de l'encapsulant 21.

L'installation peut comporter en outre des moyens de collecte des copeaux obtenus à l'étape (b) d'usinage.

Tout ce qui a été décrit dans le cadre du procédé de traitement pour recyclage d'un dispositif fonctionnel peut s'appliquer dans le cadre de l'installation de traitement pour recyclage d'un dispositif fonctionnel et inversement. Notamment, l'installation de traitement comporte les moyens matériels, et le cas échéant logiciels, pour la mise en oeuvre du procédé de traitement. Le procédé et l'installation décrits ci-dessus trouvent une application industrielle dans le cadre du désassemblage d'un ou plusieurs modules photovoltaïques en vue de recycler leurs constituants. En effet, le cas échant, il est alors possible de récupérer le verre dans son intégralité si ce dernier n'est pas cassé, de récupérer le matériau comportant le matériau polymère, de récupérer les éléments actifs du module photovoltaïque comme les cellules photovoltaïques qui pourraient être réutilisées.

## Revendications

1. Procédé de traitement pour recyclage d'un dispositif fonctionnel, notamment d'un module photovoltaïque (M), le dispositif fonctionnel comportant au moins l'un d'une cellule photovoltaïque (20) ou d'une diode électroluminescente (DEL) noyée dans un encapsulant (21) comportant un matériau polymère, le procédé comportant les étapes suivantes :
(a) irradiation du dispositif fonctionnel par un traitement ionisant modifiant les propriétés mécaniques de l'encapsulant, le traitement ionisant étant configuré pour que la dose absorbée par le dispositif fonctionnel, notamment par l'encapsulant (21), soit supérieure à 20 kGy (kiloGray), et
(b) usinage de l'encapsulant (21), afin de réduire celui-ci en copeaux.

2. Procédé selon la revendication précédente, dans lequel l'étape (b) d'usinage comprend au moins l'un de : découpage, notamment par un fil abrasif (12), fraisage, ponçage, notamment au moyen d'une bande abrasive ou d'une meule.

3. Procédé selon l'une des revendications précédentes, comportant une étape supplémentaire (c) de collecte des copeaux obtenus à l'étape (b) d'usinage.

4. Procédé selon l'une quelconque des revendications précédentes, les copeaux obtenus ayant une taille deux fois inférieure, voire trois fois inférieure, à la taille des copeaux obtenus sans irradiation, à conditions d'usinage constantes.

5. Procédé selon l'une quelconque des revendications précédentes, les copeaux obtenus ayant une taille inférieure à 60 µm, mieux inférieure à 50 µm, voire inférieure à 40 µm, étant par exemple de l'ordre de 30 µm, avec une taille de référence de 70 µm sans irradiation.

6. Procédé selon l'une quelconque des revendications précédentes, le matériau polymère comportant un élastomère transparent, notamment comportant un éthylène-acétate de vinyle (EVA) ou une polyoléfine élastomères (POE), notamment polyisobutylène (PIB), éthylène-propylène (EPR ou EPM) ou éthylène-propylène-diène monomère (EPDM).

7. Procédé selon l'une quelconque des revendications précédentes, le traitement ionisant comportant l'un au moins d'un rayonnement gamma, de rayons X, d'un rayonnement bêta, d'un faisceau d'électrons.

8. Procédé selon l'une quelconque des revendications précédentes, le traitement ionisant étant configuré pour que la dose absorbée par le dispositif fonctionnel, notamment par l'encapsulant (21), soit supérieure à 30 kGy, mieux supérieure à 40 kGy, notamment supérieure à 50 kGy.

9. Procédé selon l'une quelconque des revendications précédentes, le traitement ionisant étant configuré pour que la dose absorbée par le dispositif fonctionnel, notamment par l'encapsulant (21), soit inférieure à 150 kGy (kiloGray), voire inférieure à 130 kGy, mieux inférieure à 120 kGy, notamment inférieure à 100 kGy.

10. Procédé selon l'une quelconque des revendications précédentes, dans lequel la vitesse d'usinage est au moins deux fois supérieure, voire trois fois supérieure, à la vitesse d'usinage sans irradiation, à conditions d'usinage constantes.

11. Procédé selon l'une quelconque des revendications précédentes, dans lequel la vitesse d'usinage est supérieure à 50 mm/min, voire supérieure à 60 mm/min, mieux supérieure à 70 mm/min, étant notamment de l'ordre de 80 à 150 mm/min, étant encore mieux supérieure à 400 mm/min, voire supérieure à 500 mm/min, mieux supérieure à 600 mm/min, étant par exemple de l'ordre de 700 mm/min, avec une vitesse de référence sans irradiation de 200 mm/min, à conditions d'usinage constantes.

12. Procédé selon l'une quelconque des revendications précédentes, dans lequel à l'étape (b) d'usinage on collecte plus de copeaux en masse que sans irradiation, à conditions d'usinage constantes, notamment plus de 5%, voire plus de 10%, mieux plus de 15%, voire plus de 20% de copeaux en masse.

13. Procédé selon l'une quelconque des revendications précédentes, dans lequel à l'étape (b) d'usinage on collecte plus de copeaux en volume que sans irradiation, à conditions d'usinage constantes, notamment plus de 20%, voire plus de 30%, mieux plus de 40%, voire plus de 50% de copeaux en volume.

14. Procédé de recyclage d'un module photovoltaïque, comportant la mise en oeuvre du procédé de traitement selon l'une quelconque des revendications précédentes pour désassembler le module photovoltaïque (M).

15. Installation de traitement (30) pour recyclage d'un dispositif fonctionnel, notamment d'un module photovoltaïque (M), le dispositif fonctionnel comportant au moins l'un d'une cellule photovoltaïque ou d'une diode électroluminescente (DEL) noyée dans un encapsulant (21) comportant un matériau polymère, notamment pour la mise en oeuvre du procédé selon l'une quelconque des revendications précédentes, l'installation (30) comportant :
- un dispositif d'irradiation (31) du dispositif fonctionnel par un traitement ionisant, afin de modifier les propriétés mécaniques de l'encapsulant (21), et
- un dispositif d'usinage (32) de l'encapsulant, afin de réduire celui-ci en copeaux.
